# FASCICULE DE BREVET EUROPEEN

(11) **EP 3 449 147 B1**
(45) Date de publication et mention de la délivrance du brevet: **01.06.2022**
(21) Numéro de dépôt: 17723455.6
(22) Date de dépôt: 24.04.2017
(51) Int. Cl.: F16D 55/226, B23P 11/02, B23B 27/24, F16D 65/18, B60T 13/74

(54) **ÉCROU À FAIBLE PRIX DE REVIENT POUR SYSTÈME DE FREINAGE DE VÉHICULE**
PREISEFFIZIENTE SCHRAUBAKTUATORSYSTEM FÜR FAHRZEUGBREMSE
LOW COST SCREW SYSTEM FOR VEHICLE BRAKE SYSTEM

(30) Priorité: 26.04.2016 FR 1653664
(43) Date de publication de la demande: 06.03.2019
(73) Titulaire: Foundation Brakes France SAS, 93700 Drancy (FR)
(72) Inventeur: BOURLON, Philippe, 77230 DAMMARTIN EN GOELE (FR)
(74) Mandataire: LLR
(86) Numéro de dépôt international: PCT/FR2017/050961
(87) Numéro de publication internationale: WO 2017/187068

(56) Documents cités:
- EP-A2- 0 272 389
- DE-A1-102010 008 927
- GB-A- 1 179 235

## Description

L'invention se rapporte à un écrou pour un système de freinage pour un véhicule. Un système de freinage, par exemple un système de freinage à disque plus communément appelé « frein à disque » ou un système de freinage à tambour plus communément appelé « frein à tambour », comprend en général des moyens de friction reliés à un organe d'actionnement apte à déplacer les moyens de friction en direction d'un organe de freinage fixé à une roue du véhicule. Cela a pour but de mettre les moyens de friction en contact avec l'organe de freinage pour freiner le véhicule par friction ou de les écarter de l'organe de friction dans le but de cesser le freinage. L'organe d'actionnement est en général couplé à des moyens de transmission destinés à entrainer le déplacement des moyens de friction au moyen de l'énergie fournie par l'organe d'actionnement. Lorsque le système de freinage est un frein à disque, les moyens de friction sont formés par des plaquettes de frein et l'organe de freinage est formé par un disque solidaire de la roue. Dans le cas où le système de freinage est un frein à tambour, les moyens de friction sont formés par au moins un segment portant une garniture de frein et l'organe de freinage est formé par un tambour solidaire de la roue.

On connait des moyens de transmission formés par l'assemblage d'un écrou et d'une vis logée dans l'écrou. La vis comprend sur une face externe un filet apte à coopérer avec un trou taraudé de l'écrou. L'organe d'actionnement fait tourner la vis, ce qui engendre un mouvement hélicoïdal de l'écrou par rapport à la vis et un coulissement de l'écrou par rapport à l'organe d'actionnement. Un actionneur selon l'état de la technique où la vis pousse le piston est illustré dans DE 10 2010 008927 A1.

Pour fabriquer l'écrou, il est connu de frapper, usiner, meuler et tremper un bloc de matière pour former un moyeu de forme générale cylindrique présentant au moins une forme en relief s'étendant dans une direction perpendiculaire à un axe principale de l'écrou. Cette forme en relief est destinée à coopérer avec une paroi d'un piston dans lequel l'écrou est monté coulissant pour empêcher toute rotation de l'écrou par rapport au piston. Elle permet également de transformer le mouvement en rotation de la vis en un mouvement en coulissement de l'écrou.

Cet écrou est intéressant mais présente certains inconvénients. En effet, l'écrou étant réalisé d'un seul tenant à partir d'un unique bloc de matière, la présence de la forme en relief engendre d'importantes pertes de matière lors de la fabrication. La matière enlevée du bloc n'étant en général pas exploitable, cela engendre un surcoût dans la production de l'écrou. Cette fabrication nécessite la mise en œuvre d'un grand nombre d'opérations et requiert un équipement adapté, également source de surcoût dans la production de l'écrou. Ces inconvénients sont particulièrement sensibles lorsque l'écrou est de taille réduite et/ou le piston est de diamètre important. En effet, de tels écrous sont destinés à supporter, lors du freinage, des efforts réduits et disproportionnés par rapport au coût de leur fabrication.

Un but de l'invention est de fournir un écrou ayant un prix de revient réduit.

A cet effet, on prévoit selon l'invention un procédé de fabrication d'un système de freinage de véhicule, dans lequel :
- on usine un moyeu pour le doter d'un nez et d'un trou taraudé,
- on assemble sur le nez du moyeu une bague présentant au moins une forme en relief s'étendant dans une direction perpendiculaire à un axe principal de la bague, et
- on fixe rigidement la bague sur le moyeu de sorte que l'assemblage du moyeu et de la bague forme un écrou.

Ainsi, l'écrou comprend deux éléments distincts fabriqués séparément. Les moyens les plus adaptés peuvent donc être employés pour la fabrication de chacun de ces éléments de façon à réduire le coût global de fabrication de l'ensemble. On peut aussi de la sorte mieux maitriser, c'est-à-dire réduire, les pertes de matière engendrées par la fabrication de l'écrou. De plus, la conception de l'écrou en deux éléments distincts permet d'adapter, si besoin, l'écrou à différentes vis. Le même modèle de moyeu peut donc être utilisé pour différents modèles de dispositifs de freinage. De même, le même modèle de bague peut être utilisé pour différents modèles de dispositifs de freinage. En particulier, les dimensions de la bague peuvent être choisies, indépendamment du moyeu, en fonction des contraintes que doit subir l'écrou en service. La fixation de la bague sur le moyeu doit être suffisamment rigide pour supporter le couple de rotation engendré lors de l'application de l'effort sur un piston dans lequel le moyeu et la bague s'étendent.

Avantageusement, on fabrique la bague par usinage d'une tôle.

Avantageusement, on fabrique le moyeu par usinage d'une barre d'acier, de préférence pré-traitée.

Ainsi, la bague et le moyeu sont facilement réalisables, et ce à partir de matière première peu onéreuse et largement disponible sur le marché. De plus, une barre d'acier présente une forme proche de celle souhaitée pour le moyeu une fois usinée, ce qui permet de limiter les pertes de matière et de simplifier la fabrication.

Avantageusement, lors de l'usinage, on réalise au moins une denture sur le nez du moyeu.

La fixation rigide de la bague sur le moyeu est ainsi simple à effectuer. En effet, il suffit de doter la bague d'un diamètre interne légèrement inférieur à un diamètre externe du nez du moyeu pour que la denture permette la fixation rigide de la bague sur le moyeu. Ce mode de fixation des pièces permet d'augmenter les tolérances de fabrication, et donc de réduire les coûts, par comparaison avec un montage à force sans denture. La plage de tolérances est par exemple de 50 µm.

Avantageusement, on réalise la bague dans un matériau présentant une dureté, par exemple une dureté Vickers, inférieure à celle d'un matériau dans lequel est réalisé le moyeu.

On peut ainsi assembler la bague sur le moyeu par un simple assemblage à force. En particulier, dans le cas où le nez du moyeu est doté de dentures, on permet une pénétration des dentures dans la bague pour améliorer la fixation rigide de la bague sur le moyeu.

Avantageusement, on dote une extrémité axiale du moyeu d'un épaulement.

Cet épaulement forme une butée de fin de course de l'écrou. Il n'est ainsi pas nécessaire de prévoir un organe à part entière uniquement destiné à former une butée en fin de course de l'écrou, ce qui permet de simplifier la conception du système de freinage.

Avantageusement, on assemble la bague sur le nez du moyeu par frettage ou moletage.

Ces méthodes d'assemblage, simples, permettent d'améliorer la maitrise du procédé de fabrication du système de freinage.

On prévoit également selon l'invention un écrou fabriqué suivant un procédé tel que décrit plus haut.

On prévoit aussi selon l'invention un ensemble comprenant un écrou tel que décrit plus haut et un piston présentant un conduit de forme complémentaire à celle de la bague.

Grâce au conduit de forme complémentaire à celle de la bague, l'écrou est monté coulissant dans le conduit. On empêche également simplement toute rotation de la bague par rapport au piston.

On prévoit également selon l'invention un système de freinage de véhicule comprenant un ensemble tel que défini plus haut.

On va maintenant décrire un mode de réalisation de l'invention à l'appui des dessins annexés sur lesquels :
- la figure 1 est une vue en perspective et en coupe d'un système de freinage selon l'invention,
- la figure 2 est une vue éclatée d'un ensemble, selon l'invention, comprenant un écrou et un piston, compris dans le système de freinage de la figure 1,
- la figure 3 est une vue en perspective d'un moyeu de l'écrou illustré en figure 2,
- la figure 4 est une vue en perspective d'une bague de l'écrou illustré en figure 2,
- la figure 5 est une vue en perspective de l'écrou à l'état assemblé,
- la figure 6 est une vue en perspective du piston de la figure 2,
- la figure 7 est une vue en coupe transversale de l'ensemble à l'état assemblé, et
- les figures 8 et 9 illustrent des positions respectivement de roulage et de freinage que peut occuper l'écrou dans le piston.

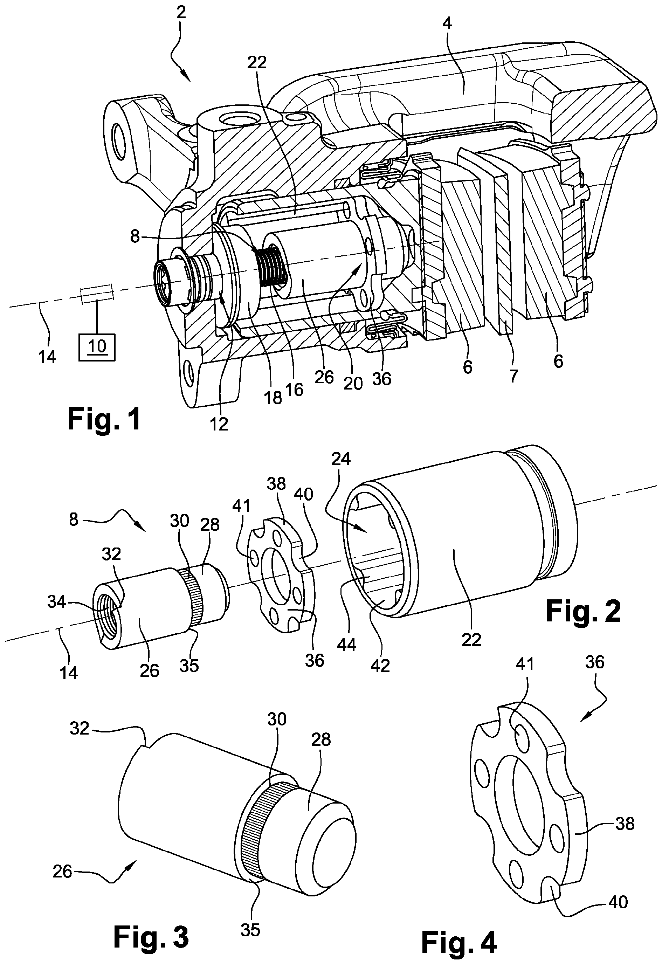

On a illustré en figure 1 un système de freinage 2 selon l'invention. Ce système 2 comprend un boîtier 4 solidaire d'un châssis d'un véhicule dans lequel le système 2 est installé, et des moyens de friction 6 montés coulissants par rapport au boîtier 4. Les moyens de friction 6 sont ici formés par deux plaquettes destinées à venir en contact avec des faces opposées d'un disque 7 solidaire d'une roue du véhicule (non représentée), le disque 7 s'étendant partiellement entre les deux plaquettes 6. On décrira plus loin comment le système de freinage 2 permet de ralentir le véhicule. Le système 2 a ici une configuration classique en étrier flottant. Cette configuration sera décrite plus loin.

Le système 2 comprend un ensemble 8 destiné à convertir un couple produit par un moteur 10 en un coulissement des plaquettes 6 vers le disque 7 et un serrage de ce dernier. L'ensemble 8 et les éléments qui le composent sont notamment illustrés en figure 2.

L'ensemble 8 comprend une vis 12 couplée au moteur 10 de sorte qu'un couple produit par le moteur 10 permet d'entrainer la vis 12 en rotation par rapport au boîtier 4 autour d'un axe principal 14 de la vis 12. Cette dernière comprend une tige filetée 16 et une couronne 18 rapportée sur la tige 16. La couronne 18 forme une tête de la vis 12.

L'ensemble 8 comprend un écrou 20 monté fixe en rotation par rapport au boîtier 4 et mobile à coulissement par rapport à ce dernier suivant l'axe 14. Il est couplé avec la vis 12 grâce à leurs filets mutuels de sorte que la vis 12 et l'écrou 20 forment une liaison hélicoïdale. Cette liaison hélicoïdale est de préférence irréversible. Cela signifie qu'une rotation de la vis 12 peut entrainer le coulissement de l'écrou 20 par rapport à la vis 12, mais qu'une force agissant sur l'écrou 20 pour le faire coulisser ne peut pas entrainer la vis 12 en rotation en retour. Cela a pour effet d'améliorer la sécurité de l'ensemble 8, puisqu'il n'est en général pas conçu pour transformer un mouvement de translation en un mouvement de rotation.

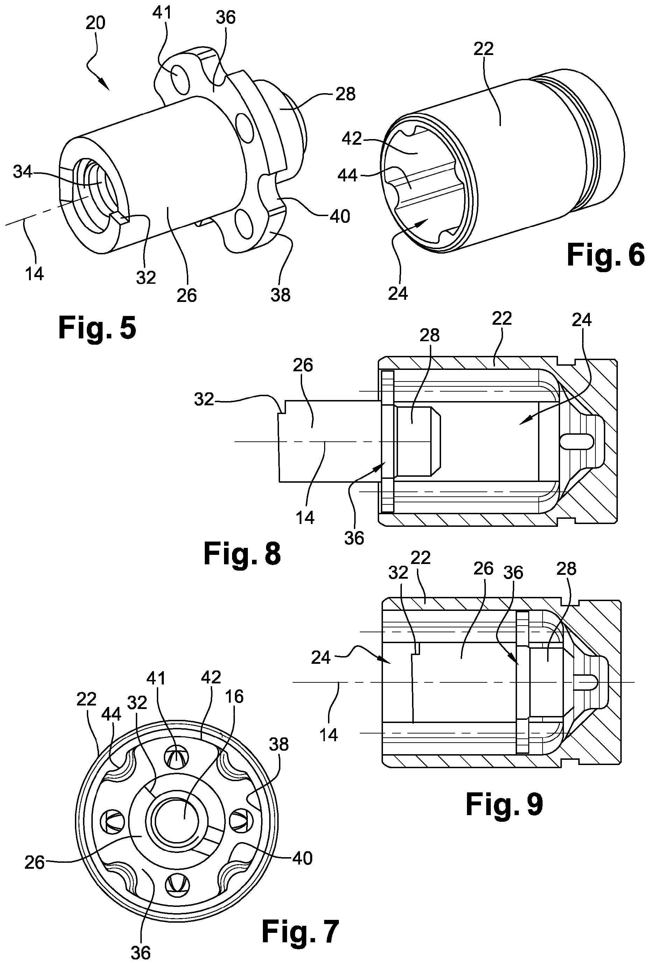

L'ensemble 8 comprend un piston 22 monté coulissant parallèlement à l'axe 14 par rapport au boîtier 4 et présentant un conduit ou logement 24 dans lequel s'étendent la vis 12 et l'écrou 20. Le piston 22 est fixé rigidement à l'une proximale des deux plaquettes 6. Cette dernière est ainsi montée coulissante parallèlement à l'axe 14 par rapport au boîtier 4. Le piston 22 et le conduit 24, illustrés en figure 6, seront décrits plus loin.

On va maintenant décrire plus en détails l'écrou 20.

Il comprend un moyeu 26 présentant un axe principal confondu avec l'axe principal 14 de la vis 12, qui forme ainsi un axe principal de l'ensemble 8. Le moyeu 26 est notamment illustré en figure 3. Il est usiné à une partie d'extrémité axiale distante de la couronne 18, dite extrémité distale, pour former un nez 28 du moyeu 26. Au moins une denture 30 formant une zone moletée est ménagée sur une partie du nez 28. On verra dans la suite quelle est la fonction de cette denture 30. Il s'agit ici d'un moletage droit et non oblique.

Le moyeu 26 présente à son autre partie d'extrémité axiale, dite extrémité proximale, un épaulement circonférentiel 32 destiné à coopérer avec un épaulement complémentaire de la couronne 18 pour former une butée de fin de course de l'écrou 20. Comme cela est visible sur la figure 5, l'épaulement circonférentiel 32 est formé par une face de forme générale rectangulaire s'étendant dans un plan parallèle à l'axe 14. En réglant la forme et les dimensions de l'épaulement circonférentiel 32 ou celles de la couronne 18, on peut déterminer la course de l'écrou 20 dans le conduit 24.

Le moyeu 26 présente un trou taraudé 34 destiné à coopérer avec la tige filetée 16 de la vis 12 pour former une liaison hélicoïdale.

Les parties d'extrémité axiales sont séparées l'une de l'autre par un épaulement annulaire contiguë à la zone moletée 30.

L'écrou 20 comprend une bague 36 présentant au moins une forme en relief 38 s'étendant dans une direction perpendiculaire à l'axe principal de la bague 36, qui est confondu avec l'axe principal 14. Comme cela est visible notamment sur la figure 2, la forme en relief 38 s'étend en s'éloignant de l'axe principal 14. La bague 36 représentée en figure 4 présente quatre formes en relief arrondies 38 entre chacune desquelles est ménagé un évidement 40. La bague 36 a ainsi une section en forme générale de trèfle à quatre feuilles. Selon des variantes de réalisation de l'invention, la bague présente des formes en relief 38 dont la position et le nombre sont différents de ceux de la bague décrite dans ce qui précède.

La bague 36 présente des orifices 41 s'étendant dans les formes en relief 38 et destinés à alléger la bague 36. Les orifices 41 traversent l'épaisseur de la bague 36 suivant une direction parallèle à l'axe 14. Le nombre d'orifices 41 et leurs dimensions sont choisis en fonction des contraintes que doit subir l'écrou 20 en service. Ils sont ici au nombre de quatre.

L'écrou 20 est fabriqué de la manière suivante.

On fabrique la bague 36 par usinage ou découpe d'une tôle.

On fabrique le moyeu 26 par usinage d'une barre d'acier, de préférence pré-traitée afin qu'il ne soit pas nécessaire de traiter le moyeu 26 qui présente une forme plus complexe que celle de la barre d'acier. Seule les parties de la barre d'acier destinées à former le nez 28, la denture 30, le trou taraudé 34 et les épaulements circonférentiel 32 et annulaire 35 du moyeu 26 sont usinées. La bague 36 est réalisée dans un matériau présentant une dureté, par exemple une dureté Vickers, inférieure à celle d'un matériau dans lequel est réalisé le moyeu 26.

On assemble la bague 36 sur le nez 28 du moyeu 26, de manière à ce qu'une face interne de la bague 36 soit en contact avec la denture 30 et en butée sur l'épaulement annulaire 35. La bague 36 est ainsi assemblée autour du nez 28 du moyeu 26, comme cela est visible notamment sur la figure 5. Cet assemblage est réalisé à force, par frettage ou moletage. Grâce à la différence de dureté des matériaux constitutifs du moyeu 26 et de la bague 36, la denture 30 pénètrent dans la bague 36 de manière à fixer rigidement cette dernière sur le moyeu 26. Cette fixation rigide permet d'empêcher toute rotation de la bague 36 par rapport au moyeu 26. La figure 5 illustre l'écrou 20 ainsi fabriqué.

En référence à la figure 7, le conduit 24 du piston 22 présente une forme complémentaire de celle de la bague 36. Plus précisément, le conduit 24 présente des gouttières ou évidements 42 parallèles à l'axe 14 et s'étendant en direction de l'axe 14, recevant les formes en relief 38 de la bague 36. Il présente aussi des protubérances ou nervures longitudinales 44 s'étendant dans les évidements 40 de la bague 36. De la sorte, la bague 36, et plus généralement l'écrou 20, est monté coulissant dans le conduit 24 parallèlement à l'axe 14. Et grâce aux formes en relief 38, le piston 22 empêche toute rotation de l'écrou 20 par rapport au piston 22.

Les étapes de fabrication que l'on vient de décrire sont peu onéreuses et génèrent peu de perte de matière.

On va maintenant décrire comment fonctionne le système de freinage 2.

On suppose que le véhicule est en déplacement. L'écrou 20 occupe la position illustrée en figure 8, dite position de roulage, et les plaquettes 6 sont situées à distance du disque 7. Si l'utilisateur souhaite ralentir le véhicule, il actionne un organe de freinage (non représenté), par exemple une pédale de frein du véhicule ou un bouton situé dans un habitacle du véhicule, qui commande la rotation du moteur 10 dans une direction de freinage. Le moteur 10 entraine ainsi la vis 12 en rotation par rapport au boîtier 4 autour de l'axe 14. La vis 12 étant en prise avec l'écrou 20 et grâce à la forme du conduit 24 du piston 22, l'écrou 20 est entrainé en coulissement par rapport au boîtier 4 parallèlement à l'axe 14.

Lors de son coulissement, l'écrou 20 finit par entrer en contact avec une extrémité axiale du conduit 24. A partir de ce moment-là, si on continue de faire tourner le moteur 10, l'écrou 20 entraine avec lui le piston 22 en coulissement parallèlement à l'axe 14. La plaquette proximale 6 étant rigidement fixée au piston 20, elle se déplace alors vers le disque 7 jusqu'à entrer en contact avec lui. L'écrou 20 occupe alors la position illustrée en figure 9, dite position de freinage. A ce moment-là, c'est l'autre plaquette 6, distale, qui commence à se déplacer vers le disque 7 en direction opposée jusqu'à entrer en contact avec lui. En effet, le système de freinage 2 ayant ici une configuration en étrier flottant, une fois que la plaquette proximale 6, c'est-à-dire celle fixée au piston 22, entre en contact avec le disque 7, si on continue de faire tourner la vis 12, c'est la plaquette distale 6 que se met à coulisser parallèlement à l'axe 14 par rapport au châssis en direction du disque 7. En d'autres termes, l'écrou 20 assure l'application des deux plaquettes 6 contre les faces opposées du disque 7.

Etant donné que le disque 7 est solidaire de la roue, la friction entre les plaquettes 6 et le disque 7 permet de transformer l'énergie cinétique de la roue en chaleur. Cela a pour effet de diminuer la vitesse de rotation de la roue et donc de ralentir le véhicule. (Une fois que la vitesse du véhicule a diminué jusqu'à une valeur souhaitée par le conducteur, il cesse d'actionner l'organe de freinage. Celui-ci commande alors une rotation du moteur 10 en direction opposée à la direction de freinage de manière que l'écrou 20 s'éloigne du disque 7. Le contact entre les plaquettes 6 et le disque 7 cesse, si bien qu'il n'y a plus de friction entre ces deux éléments. Le véhicule n'est alors plus ralenti.

On peut également prévoir que le système de freinage 2 ne soit pas destiné à ralentir le véhicule mais à le maintenir immobile. Le système de freinage 2 serait alors commandé par un organe de blocage, tel qu'un frein à main également connu sous la désignation « frein de parking ». Un véhicule est d'ailleurs généralement équipé de premiers systèmes de freinage destinés à coopérer avec l'organe de freinage et de seconds systèmes de freinage destinés à coopérer avec l'organe de blocage.

Bien entendu, on pourra apporter à l'invention de nombreuses modifications sans sortir du cadre de celle-ci.

On pourra prévoir de doter une face interne de la bague de dentures aptes à coopérer avec les dentures du moyeu pour améliorer le blocage en rotation de la bague par rapport au moyeu.

Il est également possible que la face interne de la bague soit dotée de dentures et que le moyeu en soit dépourvu. Dans ce cas-là, il est préférable que la bague soit réalisée dans un matériau présentant une dureté, par exemple une dureté Vickers, supérieure à celle du matériau dans lequel est réalisé le moyeu, de sorte que les dentures puissent pénétrer dans le moyeu pour fixer rigidement la bague sur le moyeu.

### Nomenclature :

- 2 :: système de freinage
- 4 :: boîtier
- 6 :: plaquette
- 7 :: disque
- 8 :: ensemble
- 10 :: moteur
- 12 :: vis
- 14 :: axe principal
- 16 :: tige
- 18 :: couronne
- 20 :: écrou
- 22 :: piston
- 24 :: conduit
- 26 :: moyeu
- 28 :: nez
- 30 :: denture
- 32 :: épaulement circonférentiel
- 34 :: trou taraudé
- 35 :: épaulement annulaire
- 36 :: bague
- 38 :: forme en relief
- 40 :: évidement
- 41 :: orifice
- 42 :: gouttière
- 44 :: protubérance

## Revendications

1. Procédé de fabrication d'un système de freinage (2) de véhicule, dans lequel :
- on usine un moyeu (26) pour le doter d'un nez (28) et d'un trou taraudé (34),
- on assemble sur le nez (28) du moyeu (26) une bague (36) présentant au moins une forme en relief (38) s'étendant dans une direction perpendiculaire à un axe principal (14) de la bague (36), et
- on fixe rigidement la bague (36) sur le moyeu (26) de sorte que l'assemblage du moyeu (26) et de la bague (36) forme un écrou (20).

2. Procédé selon la revendication précédente, dans lequel on fabrique la bague (36) par usinage d'une tôle.

3. Procédé selon l'une quelconque des revendications précédentes, dans lequel on fabrique le moyeu (26) par usinage d'une barre d'acier, de préférence pré-traitée.

4. Procédé selon la revendication précédente, dans lequel, lors de l'usinage, on réalise au moins une denture (30) sur le nez (28) du moyeu (26).

5. Procédé selon l'une quelconque des revendications précédentes, dans lequel on réalise la bague (36) dans un matériau présentant une dureté, par exemple une dureté Vickers, inférieure à celle d'un matériau dans lequel est réalisé le moyeu (26).

6. Procédé selon l'une quelconque des revendications précédentes, dans lequel on dote une extrémité axiale du moyeu (26) d'un épaulement (32).

7. Procédé selon l'une quelconque des revendications précédentes, dans lequel on assemble la bague (36) sur le nez (28) du moyeu (26) par frettage ou moletage.

8. Ecrou (20) **caractérisé en ce qu'**il est fabriqué suivant un procédé selon l'une quelconque des revendications précédentes.

9. Ensemble (8) comprenant un écrou (20) selon la revendication précédente et un piston (22) présentant un conduit (24) de forme complémentaire à celle de la bague (36).

10. Système de freinage de véhicule (2) comprenant un ensemble (8) selon la revendication précédente.

## Patentansprüche

1. Verfahren zur Herstellung eines Fahrzeugbremssystems (2), bei dem:
- eine Nabe (26) bearbeitet wird, um sie mit einer Nase (28) und einem Gewindeloch (34) zu versehen,
- auf der Nase (28) der Nabe (26) ein Ring (36) montiert wird, der mindestens eine Reliefform (38) aufweist, die sich in einer Richtung senkrecht zu einer Hauptachse (14) des Rings (36) erstreckt, und
- der Ring (36) starr an der Nabe (26) befestigt wird, so dass die Verbindung der Nabe (26) und des Rings (36) eine Mutter (20) bildet.

2. Verfahren nach dem vorhergehenden Anspruch, bei dem der Ring (36) durch Bearbeitung eines Blechs hergestellt wird.

3. Verfahren nach einem der vorhergehenden Ansprüche, bei dem die Nabe (26) durch spanabhebende Bearbeitung eines vorzugsweise vorbearbeiteten Stahlstabs hergestellt wird.

4. Verfahren nach dem vorhergehenden Anspruch, bei dem während der Bearbeitung mindestens eine Verzahnung (30) an der Nase (28) der Nabe (26) hergestellt wird.

5. Verfahren nach einem der vorhergehenden Ansprüche, bei dem der Ring (36) aus einem Material hergestellt wird, das eine Härte, z. B. eine Vickers-Härte, aufweist, die geringer ist als die eines Materials, aus dem die Nabe (26) hergestellt wird.

6. Verfahren nach einem der vorhergehenden Ansprüche, bei dem ein axiales Ende der Nabe (26) mit einer Schulter (32) versehen wird.

7. Verfahren nach einem der vorhergehenden Ansprüche, bei dem der Ring (36) durch Schrumpfen oder Rändeln auf die Nase (28) der Nabe (26) montiert wird.

8. Mutter (20), **dadurch gekennzeichnet, dass** sie nach einem Verfahren gemäß einem der vorhergehenden Ansprüche hergestellt wird.

9. Baugruppe (8) mit einer Mutter (20) nach dem vorhergehenden Anspruch und einem Kolben (22), der einen Kanal (24) aufweist, dessen Form komplementär zu der des Rings (36) ist.

10. Fahrzeugbremssystem (2) mit einer Baugruppe (8) nach dem vorhergehenden Anspruch.

## Claims

1. Production method for a vehicle braking system (2) wherein:
- a hub (26) is machined so as to provide it with a nose (28) and a tapped hole (34),
- a ring (36) having at least one relief (38) extending in a direction perpendicular to a main axis (14) of the ring (36) is mounted on the nose (28) of the hub (26), and
- the ring (36) is rigidly attached to the hub (26) such that the assembly consisting of the hub (26) and the ring (36) forms a nut (20).

2. Method according to the preceding claim, wherein the ring (36) is manufactured by machining a metal sheet.

3. Method according to any one of the preceding claims, wherein the hub (26) is manufactured by machining a steel bar, preferably pretreated.

4. Method according to the preceding claim, wherein, when machining, at least one set of teeth (30) is produced on the nose (28) of the hub (26).

5. Method according to any one of the preceding claims, wherein the ring (36) is made of a material whose hardness, for example Vickers hardness, is less than that of a material in which the hub (26) is made.

6. Method according to any one of the preceding claims, wherein an axial end of the hub (26) is provided with a shoulder (32).

7. Method according to any one of the preceding claims, wherein the ring (36) is mounted on the nose (28) of the hub (26) by shrink-fitting or knurling.

8. Nut (20) **characterised in that** it is manufactured using a method according to any one of the preceding claims.

9. Assembly (8) comprising a nut (20) according to the preceding claim and a piston (22) having a duct (24) whose shape is complementary to that of the ring (36).

10. Vehicle braking system (2) comprising an assembly (8) according to the preceding claim.
